(19) Europäisches Patentamt
European Patent Office
Office européen des brevets

(11) **EP 2 302 970 A1**

(12) **EUROPEAN PATENT APPLICATION**

(43) Date of publication:
**30.03.2011 Bulletin 2011/13**

(51) Int Cl.:
**H04W 48/16** (2009.01)

(21) Application number: **09305905.3**

(22) Date of filing: **28.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicants:
• **ST-Ericsson (France) SAS**
**38000 Grenoble (FR)**
• **ST-Ericsson SA**
**1228 Plan-les-Ouates (CH)**

(72) Inventors:
• **Madelaine, Sébastien**
**72000 Le Mans (FR)**
• **Preteseille, Erwann**
**72230 arnage (FR)**
• **Bouyaud, Mickael**
**72000 Le Mans (FR)**

(74) Representative: **Verdure, Stéphane et al**
**Cabinet Plasseraud**
**52 rue de la Victoire**
**75440 Paris Cedex 09 (FR)**

(54) **Devices and methods for evaluating for a user equipment the suitability of a cell in a network**

(57)     The present invention generally relates to devices and methods for evaluating for a User Equipment the suitability of a cell in a network in:
(a) Calculating a combination of an interference level value and an power value for signals emitted from the cell and received by the User Equipment;
(b) Obtaining a combined threshold from a combination of a first threshold associated with an admissible interference level for the cell and of a second threshold associated with an admissible reception power for the cell;
(c) Comparing said combination with a combined threshold;
(d) Declaring said cell suitable if the combination is greater than the combined threshold.

FIG.4.

**Description**

BACKGROUND OF THE INVENTION

**Technical Field**

The present invention generally relates to devices and methods for evaluating suitability criteria for selection and confirmation of a cell for a communication in a cellular telecommunication network.

**Related Art**

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Public Land Mobile Networks (PLMN) are subdivided in cells, each served by a dedicated Base Station (BS). Different situations lead User Equipments (UE) to determine which cells, amongst reachable ones, are suitable to provide a given service. This occurs for example when the User Equipment in idle mode is not connected to the networks.

Generally speaking, a User Equipment should select a cell if and only if several at least some of suitability criteria characterizing Quality of Service (QoS) within said cell are met.

For example, in the context of networks and user equipments complying with specifications established by 3GPP (3rd Generation Partnership Project) for the Universal Mobile Telecommunications System (UMTS), procedures for evaluating such suitability criteria have been described in the technical specification ETSI/3GPP TS 125 304 - "Universal Mobile Telecommunications System (UMTS); User Equipment (UE) procedures in idle mode and procedures for cell reselection in connected mode".

According to this specification, the suitability criteria used for selecting and/or confirming a given cell are based notably on two cumulative conditions, each relying on a specific measurement performed by the User Equipment on a channel, called Common Pilot Channel (CPICH), emitted by said cell. The first condition evaluates a cell quality value, $Q_{qualmeas}$, which reflects the quality of the received signal emitted in the cell, namely the level of interferences affecting the cell. The second condition evaluates the cell reception level value, $Q_{rxlevmeas}$, by quantifying the level of reception of the signal on the User Equipment for said cell, that is to say the cell power contribution. Both conditions taken separately have to exceed respective thresholds, in order for a cell to be considered as suitable. The values of these specific thresholds are typically broadcasted by the network.

The lower the interference level value, the better. The higher the reception power value, the better. However, a high level of interference within a cell might not be a problem if the reception power level in this cell is high enough to allow existing high performances decoding methods to be carried out. Conversely, it may be that the QoS in a cell is not jeopardized by a relatively low reception power value, provided that the interference level is low enough.

Known methods of evaluating suitability criteria as described above implies that the choice of each threshold is very sensitive and may lead to sub-optimal solutions. For example, if the threshold bound to the cell quality value $Q_{qualmeas}$ is chosen too high, a cell with a rather low quality value $Q_{qualmeas}$ but with a comparatively high reception level value $Q_{rxlevmeas}$ might not be selected by the User Equipment, whereas the overall performance of such a cell could have been sufficient to provide the required QoS.

This leads to situations wherein, for instance, a User Equipment selects a cell whereas establishing a call within said cell might be compromised due to an overall insufficient quality of service. This leads to a waste of resources, in that establishment of calls may fail, additional handovers managed by the network may be required, and cell selection may take longer time (and thus probability of interrupting the communication is higher) than it could do if good cells were not discarded in such an exaggerative manner. Also, the power consumption in the User Equipment is affected, because the process of testing various cells in the course of initial cell selection is power consuming processes for mobile terminals.

SUMMARY OF THE INVENTION

To address these needs, a first aspect of the present invention relates to a method of evaluating the suitability of a cell for communication between a User Equipment and a radio-communication network comprising:

(a) Calculating a combination of an interference level value and an power value for signals emitted from the cell and received by the User Equipment;

(b) Obtaining a combined threshold from a combination of a first threshold associated with an admissible interference level for the cell and of a second threshold associated with an admissible reception power for the cell;

(c) Comparing the combination with the combined threshold;

(d) Declaring the cell suitable if the combination is greater than the combined threshold.

The interference level value and the power value can be measured from a Pilot Channel emitted by a base station of the radio-communication network which serves the cell.

In declaring a cell suitable if the combination of the interference level value and the power value is greater than the combined threshold, the method allows to identify cells that could have the former at a low level whereas the latter is high enough to allow adequate quality of service, or vice versa. The combined threshold can be optimally adjusted so that cells in which conditions of reception are good enough to provide services are not discarded, based on the interference level value and the power value considered relatively one to the other. Stated otherwise, it is possible for a cell to be selected even if its interference level value is higher that the associated threshold or if its reception power value is lower than the associated, provided that its power reception value or its interference value, respectively, compensates for this weakness. Only cells for which the interference level value and the reception power value fail to reach acceptable values against the combined threshold will be rejected.

Thanks to the combined threshold and the combination of the interference level value and the reception power value, only cells with low probability of service (re)selection success will be excluded. Consequently, it permits User Equipments to save time and to limit power consumption losses, since useless trials to select other cells can be avoided.

The combination can be a linear combination of the standard interference level value and reception power value. Alternatively, the combination might be chosen between non-linear functions of the interference level value and the power value, for instance quadratic or exponential functions.

Thereby, different weights can be set for the interference level value and for the reception power value. Consequently, the contributions of both measurements can be adapted and fine-tuned.

Independently of the choice of mathematical function which it implements, the combination can include further parameters and/or coefficients, which can be received from the network in additional steps.

It allows the network to adapt implementations of the method, taking into consideration its infrastructure and its performances. Also, the behaviour of the method can be dynamically adapted. This gives even greater flexibility in the configuration and the deployment of the method.

The combined threshold can be obtained in combining a first threshold for the interference level value and a second threshold for the power value. In particular, the combined threshold can be obtained with a linear combination of the first threshold and the second threshold. Alternatively, the combined threshold can be obtained from a non-linear combination of the first threshold and the second threshold. Independently of the way chosen to obtain it, the combined threshold or the first and the second thresholds can be received from the network in an additional step.

Using a first threshold for the interference level value and a second threshold for the power value allows using the invention within legacy networks already deployed. It eases the implementation of the method within existing systems. Using parameters/coefficients for combining the first threshold and the second threshold allows to give different weights to each threshold. Receiving the thresholds allows the network to configure the method, taking into consideration its infrastructure and its performance. The behaviour of the method can be dynamically adapted It also gives a greater flexibility in the configuration and the deployment of the invention.

In one embodiment of the present invention, the network is generally compliant with the technical specifications defining a Universal Mobile Telecommunications System UMTS.

A second aspect of the present invention relates to a computer program product comprising one or more stored sequences of instructions that are accessible to a processor and which, when executed by the processor, cause the processor to carry out the steps of the method of the first aspect of the present invention.

A third aspect of the present invention relates to a cell suitability evaluation device comprising:

- a first input to receive an interference level value and a power value for signals emitted from a cell of a network;

- a second input to receive a combined threshold from a combination of a first threshold associated with an admissible interference level for the cell and of a second threshold associated with an admissible reception power for the cell;

- an output ;

- a processing unit coupled to the first input to calculate a combination of said interference level value and said power value;

- a comparator, coupled to the output of the processing unit and to the second input, to perform a comparison between the value of the combination function and the combined threshold, and to deliver the result of said comparison to

The combination can be a linear combination of the interference level value and the power value. Alternatively, the combination can be a non-linear combination of the interference level value and the power value. Independently of its choice, the combination can comprise parameters and/or coefficients, which can be received on the first input.

The combined threshold can be obtained in combining a first threshold for the interference level value and a second threshold for the power value. Alternatively, the combined threshold can be obtained in combining with a linear or a non-linear combination the first threshold and the second threshold. Independently of the way chosen to obtain it, the combined threshold or the first and the second thresholds can be received on the second input.

A fourth aspect of the present invention relates to a User Equipment comprising an antenna coupled to a radio processing unit implementing a network stack to connect to a network comprising a plurality of cells. The radio processing unit comprises:

- a measuring module to carry out measurements of an interference level value and a power value for signals emitted from cells and received by the User Equipment;

- a cell suitability evaluation device, according to the third aspect of the present invention, coupled to the outputs of the measuring module to receive the interference level value and the power value.

The User Equipment can be generally compliant with the technical specifications defining a Universal Mobile Telecommunications System UMTS.

A fifth aspect of the present invention relates to a communication system comprising a plurality of cells and User Equipment according to the fourth aspect of the present invention.

BRIEF DESCRIPTION OF THE DRAWINGS

The present invention is illustrated by way of example, and not by way of limitation, in the figures of the accompanying drawings, in which like reference numerals refer to similar elements and in which:

- Figure 1 is a schematic view of a public land mobile network comprising a plurality of cells and a user equipment, forming a radio-communication system according to one aspect of the present invention;

- Figure 2 is a schematic block diagram of a cell suitability evaluation device according to another aspect of the present invention;

- Figure 3 is a schematic block diagram of a User Equipment according to another aspect of the present invention;

- Figure 4 is a flow chart illustrating steps of a method of evaluating the suitability of a cell in a network according to still another aspect of the present invention.

DESCRIPTION OF PREFERRED EMBODIMENTS

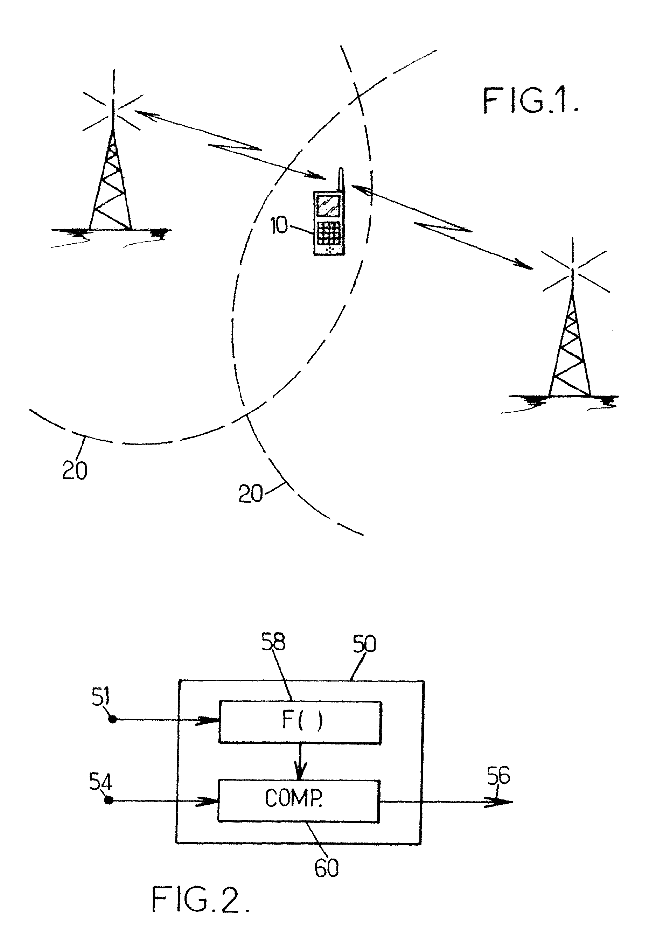

Referring to Figure 1, there is shown therein a schematic view of a public land mobile network (PLMN) comprising a plurality of cells 20, each served by a dedicated base station, and a user equipment 10 capable of using at least a subset of ressources provided by said network. The PLMN comprises a plurality of cells like cell 20, each of which can be uniquely identified by the user equipment 10 based on an identification pattern broadcasted by the corresponding based station over the geographical area which defines the cell.

Different situations lead the user equipment to perform cell searches. For example, in order to establish a list of available public land mobile networks PLMN, the user equipment may start a cell search. Events like the power-up of the user equipment 10 or the loss of a serving cell are others examples for which determining or updating a list of cells available to provide a bunch of services to the User Equipment might be necessary.

Depending on its geographical position, the user equipment 10 may simultaneously receive respective identification patterns from a plurality of different, overlapping cells. The user equipment has to select which cell is best suitable to provide the expected service.

In the description above, it will be understood that the public land mobile network PLMN and the user equipment are generally compliant with the technical specification of Universal Mobile Telecommunications System UMTS with Frequency Division Duplexing cells. In particular, the embodiments of the invention described hereinafter may be of a particular interest to improve the procedures for cell selection as proposed by the technical specification ETSI TS 125304 - "Universal Mobile Telecommunications System (UMTS); User Equipment (UE) procedures in idle mode and procedures for cell reselection in connected mode". Of course, it is noted that the invention is not, in any way, intended to be limited to networks and equipments compliant with this specific standard. The teachings of the present invention encompass all communication networks and equipments for which cell selection or equivalent is applicable, for example GSM, TETRA, WIMAX...

A User Equipment can select or reselect, i.e., confirm a given cell if and only if several suitability criteria are met for this cell. The suitability criteria for a given cell are mainly determined based on two classic measurements: the cell quality value $Q_{qualmeas}$ and the cell reception power level value $Q_{rxlevmeas}$. Both values can be obtained by the User Equipment in monitoring a channel, namely the Common Pilot Channel CPICH. The Common Pilot Channel CPICH is a fixed rate downlink physical channel that carries a pre-defined bit sequence. The Common Pilot Channel CPICH holds slots, each carrying said sequence. Each slot is subdivided in 2560 chips coded on 20 bits.

The cell quality value $Q_{quatmeas}$ is a measurement expressing in decibels (dB) the quality of the received signal emitted across the cell. Typically the cell quality value $Q_{qualmeas}$ is equal to the ratio CPICH $E_c/N_0$ of the received energy per chip for the Common Pilot Channel CPICH to the total received power spectral density at the User Equipment antenna connector. The ratio CPICH $E_c/N_0$ is a relative indication of the power of the cell. It indicates intra and extra cellular noise brought by other physical channels of the cell and other cells on the same frequency. This measurement is bound to the interference level affecting the cell.

The cell reception power level value $Q_{rxlevmeas}$ is a measurement expressing, in decibels to one milliwatt dBm, the power level of the signal received by the User Equipment for said cell, namely from the corresponding base station. Typically the cell reception power level value $Q_{rxlevmeas}$ is equal to the value CPICH RSCP corresponding to the received power on one code measured by User Equipment on the Common Pilot Channel CPICH. The value CPICH RSCP is an absolute value of the power of the cell. This measurement is representative of the cell power contribution.

Referring now to Figure 2, there is shown therein a schematic block diagram of a cell suitability evaluation device 50 according to an aspect of the present invention.

The cell suitability evaluation device 50 comprises a first input 51 to receive the cell reception level value $Q_{rxlevmeas}$ and the cell quality value $Q_{qualmeas}$ of a given cell. It also comprises a second input 54 to receive a combined threshold CT. On an output 56 the cell suitability evaluation device is able to deliver a signal indicating if said cell is suitable or not. The cell suitability evaluation device comprises a processing unit 58 coupled to the first input 51. The processing unit 58 is able to calculate the value of a combination function F for the couple quality value / reception level value ($Q_{qualmeas}$, $Q_{rxlevmeas}$), received from the first input 52.

In one embodiment of the cell suitability evaluation device, the combination function F is the addition of the cell reception level value $Q_{rxlevmeas}$ and the cell quality value $Q_{qualmeas}$:

$$F (Q_{qualmeas}, Q_{rxlevmeas}) = Q_{qualmeas} + Q_{rxlevmeas}$$

For this combination function F, both the cell reception level value $Q_{rxlevmeas}$ and the cell quality value $Q_{qualmeas}$ remain at same level of importance, the contribution of each of them being combined by way of addition.

Other suitable alternatives for the choice of the combination function F are presented hereinafter. It should be understood, however, that the invention is not intended to be limited by the combination functions F described herein. The combination function F may preferably be chosen amongst linear combinations of the cell reception level value $Q_{rxlevmeas}$ and the cell quality value $Q_{qualmeas}$, having the following form:

$$F (Q_{qualmeas}, Q_{rxlevmeas}) = ( A \times Q_{qualmeas} ) + ( B \times Q_{rxlevmeas} ) ;$$

wherein A and B are coefficients, typically real numbers.

The combination function F may also be chosen amongst the non-linear combinations of the cell reception level value $Q_{rxlevmeas}$ and the cell quality value $Q_{qualmeas}$, for example:

$$F (Q_{qualmeas}, Q_{rxlevmeas}) = \sqrt{ [(A \times Q_{qualmeas}) + (B \times Q_{rxlevmeas})]};$$

In the both cases, according to the value of the coefficients A and B, different weights can be given to the cell

reception level value $Q_{rxlevmeas}$ and to the cell quality value $Q_{qualmeas}$ The value of the coefficients A and B can be constant and possibly hardcoded in the device 50 or in the processing unit 58. Another possibility is that the values of the coefficients A and B are known by the processing unit 58 following their reception from one of its inputs. Typically, the network might broadcast for each cell in the form of System Information the values of the coefficients A and B, the processing unit 58 being then capable of taking into account the coefficients A and B as diffused by the network.

The cell suitability evaluation device 50 comprises a comparator 60 coupled to the output of the processing unit 58 and to the second input 54. The comparator 60 is able to calculate and to deliver on the output 56 the result of the comparison between the value of the combination function F with the combined threshold CT. For example, the comparator may evaluate the following comparison:

$$F\,(Q_{qualmeas},\,Q_{rxlevmeas}) > CT$$

In one embodiment of the cell suitability evaluation device, the combined threshold CT is directly obtained from the network. The combined threshold CT can be broadcasted using System Information. Alternatively, the combined threshold CT might be hardcoded or known by the comparator 60.

In a preferred embodiment, however, the combined threshold CT is obtained at the User Equipment by combining a first threshold $Q_{qualmin}$ for cell quality value $Q_{qualmeas}$ and a second threshold $Q_{rxlevmin}$ for the cell reception level value $Q_{rxlevmeas}$. The first threshold $Q_{qualmin}$ and the second threshold $Q_{rxlevmin}$ are typically the standard thresholds as specified in the technical specification TS 125.133. The combined threshold CT is thus obtained in calculating the value of a thresholds combination function F' for the couple formed by the first threshold $Q_{qualmin}$ and the second threshold $Q_{rxlevmin}$.

Such embodiment provides compatibility with existing PLMN, since it does not require broadcasting by the network of additional information.

The combined threshold CT may thus be calculated by applying the following function:

$$CT = F'\,(Q_{qualmin},\,Q_{rxlevmin}) = Q_{qualmin} + Q_{rxlevmin}$$

For example, if the first threshold $Q_{qualmin}$ is set to -5dB and the second threshold to -115 dBm, the combined threshold CT will be equal to -120.

Other suitable alternatives for the choice of the thresholds combination function F' are presented hereinafter. It should be understood, however, that the invention is not intended to be limited by the thresholds combination functions F' described herein. The thresholds combination function F' may be chosen amongst the linear combinations of the first threshold $Q_{qualmin}$ and the second threshold $Q_{rxlevmin}$:

$$F'\,(Q_{qualmin},\,Q_{rxlevmein}) = (\,A' \times Q_{qualmin}\,) + (\,B' \times Q_{rxlevmin}\,)\,;$$

wherein A' and B' are coefficients, typically real numbers.

The thresholds combination function F may also be chosen amongst the non-linear combinations of the linear combinations of the first threshold $Q_{qualmin}$ and the second threshold $Q_{rxlevmin}$, for example:

$$F'\,(Q_{qualmin},\,Q_{rxlevmin}) = \sqrt{\,[(A' \times Q_{qualmin}) + (B' \times Q_{rxlevmin})]}.$$

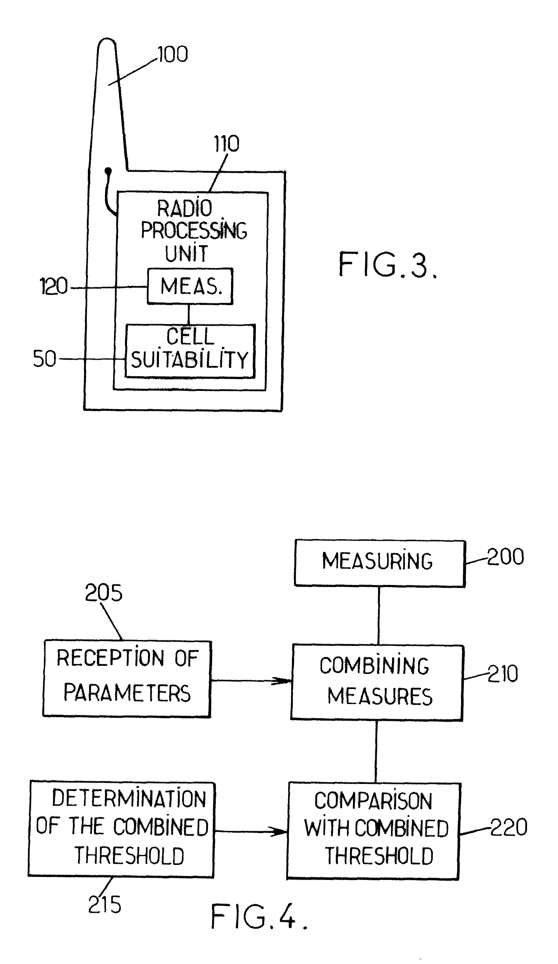

Referring now to Figure 3, there is shown therein a schematic block diagram of a User Equipment according to another aspect of the present invention.

The User Equipment comprises an antenna 100 coupled to a radio processing unit 110 implementing a network stack. The User Equipment is able to interact with the Public Land Mobile Network, and in particular to receive via its antenna the Common Pilot Channels CPICH of the cells of said network. The radio processing unit 110 comprises itself a measuring module 120 to carry out measurements on the Common Pilot Channels CPICH, notably the cell reception level value $Q_{rxlevmeas}$ and of the cell quality value $Q_{qualmeas}$. The radio processing unit 110 comprises the cell suitability evaluation device 50 according to an aspect of the present invention. The cell suitability evaluation device 50 is coupled to the measuring module 120 so as to receive the cell reception level value $Q_{rxlevmeas}$ and of the cell quality value

$Q_{qualmeas}$. The cell suitability evaluation device 50 may also be coupled to the radio processing unit 110 to receive the combined threshold CT or alternatively the first threshold $Q_{qualmin}$ and the second threshold $Q_{rxlevmin}$. The radio processing unit 110, the measuring module 120 and the cell suitability evaluation device 50 can be implemented in hardware, software, or a combination of hardware and software. Any processor, controller, or other apparatus adapted for carrying out the functionality described herein is suitable. A typical combination of hardware and software could include a general purpose microprocessor (or controller) with a computer program that, when loaded and executed, carries out the functionality described herein.

A method of evaluating the suitability of a cell in a network according to an aspect of the present invention will now be described in view of Figure 4.

The method first comprises a step 200 of measuring for a given cell the cell reception level value $Q_{rxlevmeas}$ and the cell quality value $Q_{qualmeas}$ of a given cell.

In a step 210, the combination of the cell quality value and the cell reception level value is processed. This step can be realized in determining the value of the combination function F for the cell quality value and the cell reception level, eventually using parameters and/or coefficients received in an optional step 205.

In a step 220, the combination of the cell quality value and the cell reception level value is compared to the combined threshold CT. If the combination of the cell quality value and the cell reception level value is greater than the combined threshold CT, the cell is declared as suitable for the User Equipment, otherwise the cell is declared as not suitable for the User Equipment. The combined threshold CT can be received or calculated in an optional step 215.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after either or both of the following a) conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. Method of evaluating for the suitability of a cell for communication between a User Equipment and a radio-communication network comprising, wherein the method comprising the steps of:

   (a) Calculating (210) a combination (F) of an interference level value ($Q_{qualmeas}$) and an reception power value ($Q_{rxlevmeas}$) for signals emitted from the cell and received by the User Equipment;
   (b) Obtaining a combined threshold (CT) from a combination of a first threshold ($Q_{qualmin}$) associated with an admissible interference level for the cell and of a second threshold ($Q_{rxlevmin}$) associated with an admissible reception power for the cell;

(c) Comparing the combination (F) with the combined threshold (CT);

(d) Declaring the cell suitable if the combination (F) is greater than the combined threshold (CT).

2. Method according to claim 1, wherein the interference level value ($Q_{qualmeas}$) and the power value ($Q_{rxlevmeas}$) are measured from a Pilot Channel (CPICH) emitted by a base station of the radio-communication network which serves the cell.

3. Method according to claim 1 or 2, wherein the combination (F) is a linear combination of the standard interference level value ($Q_{qualmeas}$) and the reception power value ($Q_{rxlevmeas}$).

4. Method according to claim 3, wherein the combination (F) includes further parameters and/or coefficients (A, B), received from the network in an additional step (205).

5. Method according to claim 1, wherein the combined threshold (CT) is obtained in combining (F') with a linear combination the first threshold ($Q_{qualmin}$) and the second threshold ($Q_{rxlevmin}$).

6. Method according to claim 1, wherein the combined threshold (CT) or the first and the second thresholds ($Q_{qualmin}$, $Q_{rxlevmin}$) are received from the network in an additional step (215).

7. A computer program product comprising one or more stored sequences of instructions that are accessible to a processor and which, when executed by the processor, cause the processor to perform: / to carry out the steps of any of Claims 1 to 6.

8. A cell suitability evaluation device (50) comprises:

• a first input (51) to receive an interference level value ($Q_{qualmeas}$) and a reception power value ($Q_{rxlevmeas}$) for signals emitted from a cell of a network;
• a second input (54) to receive a combined threshold (CT) from a combination of a first threshold ($Q_{qualmin}$) associated with an admissible interference level for the cell and of a second threshold ($Q_{rxlevmin}$) associated with an admissible reception power for the cell;
• an output (58) ;
• a processing unit (58) coupled to the first input (51) to calculate a combination (F) of said interference level value ($Q_{qualmeas}$) and said reception power value ($Q_{rxlevmeas}$);
• a comparator (60) coupled to the output of the processing unit (58) and to the second input (54), to perform a comparison between the value of the combination function (F) and the combined threshold (CT), and to deliver the result of said comparison to the output (58).

9. Device according to claim 8 wherein the combination (F) is a linear combination of the standard interference level value ($Q_{qualmeas}$) and the reception power value ($Q_{rxlevmeas}$).

10. Device according to claim 8 or 9, wherein the combination (F) includes further parameters and/or coefficients (A, B) received on the first input (51).

11. Device according to claim 10, wherein the combined threshold (CT) is obtained in combining (F') with a linear combination the first threshold ($Q_{qualmin}$) and the second threshold ($Q_{rxlevmin}$).

12. Device according to claim 8, wherein the combined threshold (CT) or the first and the second thresholds ($Q_{qualmin}$, $Q_{rxlevmin}$) are received on the second input (54).

13. User Equipment comprising an antenna (100) coupled to a radio processing unit (110) implementing a network stack to connect to a network comprising a plurality of cells, wherein the radio processing unit 110 comprises:

• a measuring module (120) to carry out measurements of an interference level value ($Q_{qualmeas}$) and a power value ($Q_{rxlevmeas}$) for signals emitted from cells and received by the User Equipment;
• a cell suitability evaluation device 50, according to any of Claims 8-12, coupled to the outputs of the measuring module (120) to receive the interference level value ($Q_{qualmeas}$) and the power value ($Q_{rxlevmeas}$).

**14.** Communication system comprising a plurality of cells and User Equipment according to Claim 13.

FIG.1.

FIG.2.

FIG.3.

FIG.4.

Europäisches
Patentamt

European
Patent Office

Office européen
des brevets

## EUROPEAN SEARCH REPORT

Application Number

EP 09 30 5905

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 718 171 B1 (HUNZINGER JASON F [US]) 6 April 2004 (2004-04-06) * abstract * * column 3, line 32 - column 5, line 30 * ----- | 1-14 | INV. H04W48/16 |
| A | US 2004/063427 A1 (NARASIMHA MURALI [US] ET AL) 1 April 2004 (2004-04-01) * abstract * * paragraph [0029] - paragraph [0035] * ----- | 1-14 | |
| A | EP 1 161 108 A (MITSUBISHI ELECTRIC CORP [JP]) 5 December 2001 (2001-12-05) * abstract * * column 8, line 15 - column 9, line 2 * ----- | 1-14 | |
| | | | TECHNICAL FIELDS SEARCHED (IPC) |
| | | | H04W |

The present search report has been drawn up for all claims

| Place of search | Date of completion of the search | Examiner |
|---|---|---|
| Munich | 25 February 2010 | Hodgins, Will |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
.................................................................................................
& : member of the same patent family, corresponding
     document

EPO FORM 1503 03.82 (P04C01)

EP 2 302 970 A1

## ANNEX TO THE EUROPEAN SEARCH REPORT
## ON EUROPEAN PATENT APPLICATION NO.

EP 09 30 5905

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2010

| Patent document cited in search report | | Publication date | Patent family member(s) | | Publication date |
|---|---|---|---|---|---|
| US 6718171 | B1 | 06-04-2004 | JP | 3666416 B2 | 29-06-2005 |
| | | | JP | 2002058075 A | 22-02-2002 |
| | | | US | 2004157632 A1 | 12-08-2004 |
| US 2004063427 | A1 | 01-04-2004 | AU | 2003272765 A1 | 23-04-2004 |
| | | | CN | 1666557 A | 07-09-2005 |
| | | | EP | 1547422 A1 | 29-06-2005 |
| | | | JP | 4384042 B2 | 16-12-2009 |
| | | | JP | 2006501773 T | 12-01-2006 |
| | | | WO | 2004032560 A1 | 15-04-2004 |
| EP 1161108 | A | 05-12-2001 | CN | 1350755 A | 22-05-2002 |
| | | | DE | 60023663 D1 | 08-12-2005 |
| | | | DE | 60023663 T2 | 24-05-2006 |
| | | | WO | 0152576 A1 | 19-07-2001 |
| | | | JP | 3790163 B2 | 28-06-2006 |
| | | | US | 7039436 B1 | 02-05-2006 |